# EUROPÄISCHE PATENTSCHRIFT

(11) **EP 3 977 724 B1**
(45) Veröffentlichungstag und Bekanntmachung des Hinweises auf die Patenterteilung: **15.11.2023**
(21) Anmeldenummer: 20734834.3
(22) Anmeldetag: 29.05.2020
(51) Int. Cl.: H04N 13/239, H04N 13/246

(54) **VERFAHREN FÜR EIN STEREOKAMERASYSTEM ZUR ERKENNUNG VON ABWEICHUNGEN VON EINER KALIBRIERUNG UND STEREOKAMERASYSTEM HIERFÜR**
METHOD FOR DETECTION OF DEVIATION FROM A CALIBRATION FOR A STEREO CAMERA SYSTEM AND STEREO CAMERA SYSTEM THEREFOR
PROCÉDÉ DE DETECTION DE DEVIATION D'UNE CALIBRATION POUR UN SYSTEME DE CAMERA STEREO ET SYSTEME DE CAMERA STEREO ASSOCIÉ

(30) Priorität: 29.05.2019 DE 102019207954
(43) Veröffentlichungstag der Anmeldung: 06.04.2022
(73) Patentinhaber: Rodenstock GmbH, 80687 München (DE)
(72) Erfinder: TIEMANN, Markus, 81539 München (DE)
(74) Vertreter: RCD-Patent Giesen, Schmelcher & Griebel Patentwanwälte PartG mbB
(86) Internationale Anmeldenummer: PCT/EP2020/065043
(87) Internationale Veröffentlichungsnummer: WO 2020/240005

(56) Entgegenhaltungen:
- US-A1- 2008 239 064
- US-A1- 2013 010 084

## Beschreibung

Die Erfindung betrifft ein Verfahren für ein Stereokamerasystem zur Erkennung von Abweichungen von einer Kalibrierung und ein Stereokamerasystem hierfür.

### Hintergrund

Allgemein werden Stereokamerasysteme bei einer Vielzahl von Anwendungen verwendet. Nachfolgend wird stellvertretend für andere Anwendungen nur auf die Verwendung bei Optikern eingegangen, um die Probleme zu erläutern.

Für die Fertigung nutzerspezifischer Brillengläser spielt der Sitz der Brille im Gesicht des Nutzers eine entscheidende Rolle.

Mit einem 3D-Videozentriersystem, beispielsweise dem Rodenstock ImpressionIST^{®}, können die dafür wichtigen Messdaten gesammelt werden.

Dazu schaut ein Nutzer in den vor einem Stereokamerasystem angebrachten Spiegel. Dabei wird der Nutzer von zwei Kameras aus zwei Perspektiven erfasst.

Mithilfe dieser Bilder können Parameter des Gesichts im Zusammenspiel mit einer gewählten Fassung wie der Abstand der Pupillen zueinander und deren Durchmesser vermessen werden.

Die ermittelten Mess-Ergebnisse kann der Optiker zusammen mit einer Bestellung und den Ergebnissen aus einem normalen Sehtest an den Anmelder senden.

Aus den so übermittelten Daten erfolgt die Berechnung der für den Nutzer angepassten Brillengläser, die im besten Fall an jedem einzelnen Durchblickpunkt ideal auf die Augen des Nutzers abgestimmt sind.

Damit die Stereokamerasysteme sinnvolle Mess-Ergebnisse liefern können, müssen die Systeme kalibriert sein.

Hierzu werden diese Systeme mit Kalibrierkörpern, z.B. Platten, kalibriert, auf denen sich verschiedene Muster befinden, deren Größe und Abstände bekannt sind. Dadurch lassen sich die internen (z.B. Sensorgröße, Fokuslänge, Objektivverzerrungen usw.) und externen (Abstand und Orientierung der Kameras zueinander) Kameraparameter bestimmen.

US2013/0010084 A1 offenbart ein stereoskopisches Kamerasystem zum Korrigieren einer Verschiebung zwischen linken und rechten Bildern, die durch eine Verschiebung zwischen optischen Achsen der Stereokameras verursacht wird, unter Verwendung eines Zielobjekts.

US2008/0239064 A1 offenbart ein stereoskopisches Kamerasystem zum Einstellen der optischen Achsen basierend auf Bildern eines Objekts.

Allerdings kann es aufgrund verschiedener Gründe zu Änderungen des Systems nach dem Kalibrieren kommen. Dies trifft insbesondere auf die externen Parameter zu, die sich z.B. aufgrund von Umwelteinflüssen (z.B. mechanische Kräfte auf die Kamerahalter, Wärmeausdehnung, Erschütterungen usw.) ändern können.

Eine fehlerhafte Kalibrierung lässt sich zum Teil schlecht feststellen, wenn die Messergebnisse des Stereokamerasystems zwar falsch sind, aber noch plausibel.

Eine Nachkalibirerung erfordert im Stand der Technik die erneute Vermessung mit einem oder mehreren bekannten Kalibriekörper(n). Dies ist in aller Regel mit einem kostspieligen und zeitaufwändigen Serviceeinsatz verbunden. Fehlerhafte Kalibrierungen führen auch zu fehlerhaften Produkten (z.B. Brillengläser).

Der Erfindung liegt die Aufgabe zu Grunde, ein Verfahren bereitzustellen, das eine Abweichung von der Kalibrierung erkennen kann, und so eine als notwendig erachtete Nachkalibrierung nur bei einer gegebenen Abweichung anzeigt und diese Nachkalibrierung durchführt.

Die Lösung der Aufgabe erfolgt mittels eines Verfahrens gemäß dem Hauptanspruch und einem Stereokamerasystem gemäß einem nebengeordneten Anspruch.

In den Figuren zeigt
Fig. 1 einen schematischen Aufbau eines Stereokamerasystems zur Verwendung erfindungsgemäßer Verfahren,
Fig. 2 eine schematische Darstellung von Sichtlinien im dreidimensionalen Raum und deren Abstand zueinander, und

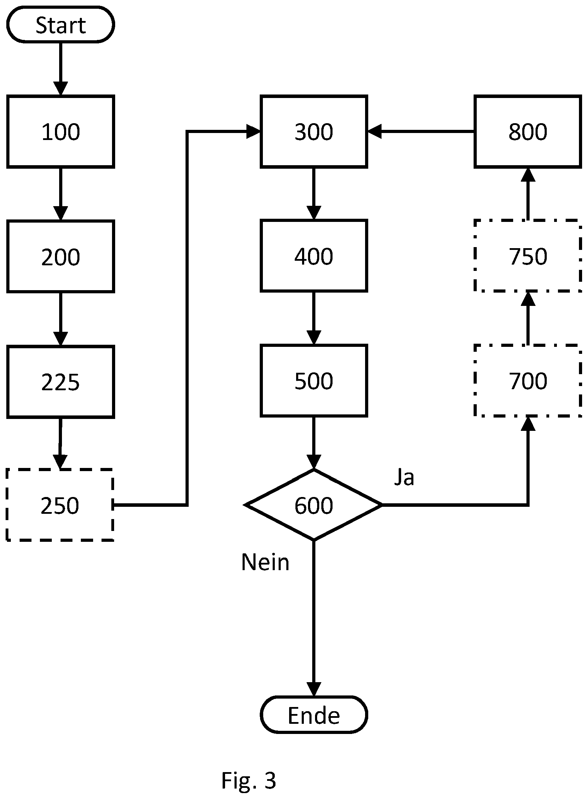

Fig. 3 ein exemplarisches Ablaufschema gemäß Ausführungsformen der Erfindung.

Nachfolgend wird die Erfindung eingehender (unter Bezugnahme auf die Figuren) dargestellt werden.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Angaben mit Zahlenwerten sind in aller Regel nicht als exakte Werte zu verstehen, sondern beinhalten auch eine Toleranz von +/- 1% bis zu +/- 10 %.

Bezugnahme auf Standards oder Spezifikationen oder Normen sind als Bezugnahme auf Standards bzw. Spezifikationen bzw. Normen, die zum Zeitpunkt der Anmeldung und/oder - soweit eine Priorität beansprucht wird - zum Zeitpunkt der Prioritätsanmeldung gelten / galten zu verstehen. Hiermit ist jedoch kein genereller Ausschluss der Anwendbarkeit auf nachfolgende oder ersetzende Standards oder Spezifikationen oder Normen zu verstehen.

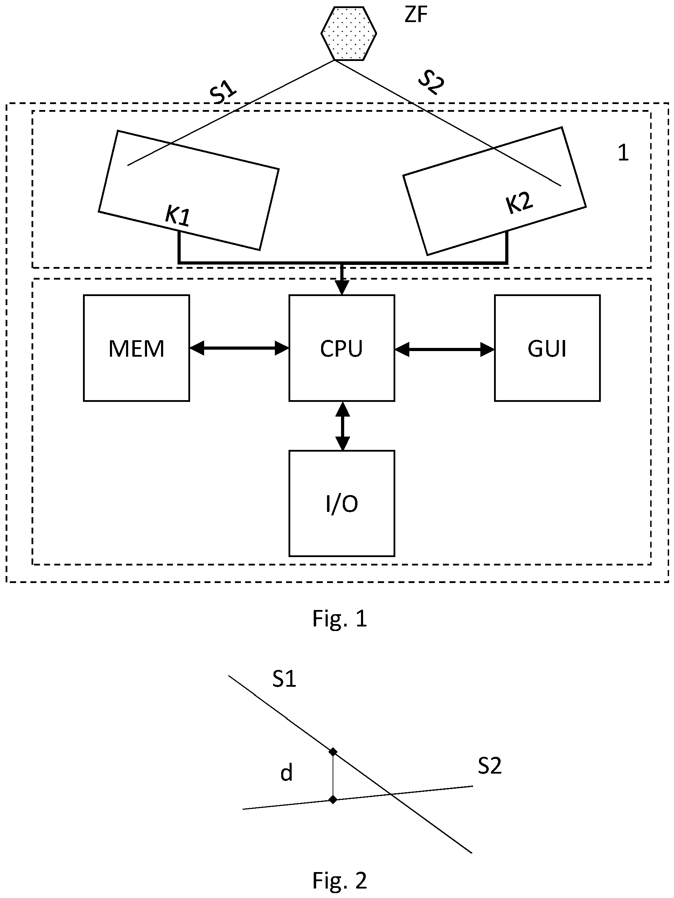

In einem erfindungsgemäßen Verfahren wird ein Stereokamerasystem 1 als Messwertgeber angenommen. Das Stereokamerasystem 1 weist wie in Figur 1 gezeigt eine erste Kamera K1 und eine zweite Kamera K2 auf. Das Stereokamerasystem 1 kann (integriert hierzu oder extern) eine geeignete Auswerteeinrichtung aufweisen. Diese Auswerteeinrichtung kann z.B. als herkömmlicher PC / Laptop / etc. ausgestaltet sein. Die Auswerteeinrichtung kann einen Prozessor oder mehrere Prozessoren CPU aufweisen, die Bilddaten von der ersten Kamera K1 und der zweiten Kamera K2 zeitgleich oder aufeinanderfolgend erhalten kann. Dem Prozessor bzw. den Prozessoren CPU ist zumindest ein Speicher MEM zugeordnet, der Daten zur Verarbeitung speichern kann. Weiterhin weist die Auswerteeinrichtung zumindest eine Möglichkeit zur Anzeige und optional eine Möglichkeit zur Entgegennahme von Nutzerinteraktion auf, die in der Figur gemeinschaftlich als Graphical User Interface GUI angegeben ist. Die tatsächliche Ausführung ist hierauf jedoch nicht beschränkt, sondern kann alle geeigneten Mittel zur Ausgabe von Daten und Entgegennahme von Nutzerinteraktion betreffen. Weiterhin kann die Auswerteeinrichtung über eine (oder mehrere) Kommunikationsschnittstellen I/O zur Kommunikation mit entfernten Geräten verfügen. Über die Kommunikationsschnittstelle I/O können z.B. Messdaten an einen Brillenglashersteller oder aber Messdaten oder Ergebnisse der Kalibrierungsüberprüfung gesendet werden. Die Kommunikationsschnittstelle I/O kann drahtgebunden oder drahtlos ausgeführt sein.

Die erste Kamera K1 und die zweite Kamera K2 sind mit unterschiedlichen Blickrichtungen auf ein Zielfeld ZF gerichtet.

Das Zielfeld ZF kann im Falle der Verwendung bei einem Optiker das Gesicht eines Kunden/Patienten sein.

In einem erfindungsgemäßen Verfahren, das sowohl in Hardware als auch in Software als auch Mischformen hiervon implementiert sein kann wird in einem ersten Schritt 100 ein erstes Bildes des Zielfeldes ZF mittels der ersten Kamera K1 des Stereokamerasystems 1, und in Schritt 200 ein zweites Bild des Zielfeldes ZF mittels der zweiten Kamera K2 des Stereokamerasystems 1 aufgenommen.

Offensichtlich können die Schritte 100 und 200 auch in umgekehrter Reihenfolge oder gleichzeitig ausgeführt werden. Bei einer hintereinander ausgeführten Bildacquisition sollte die Zeit zwischen den einzelnen Aufnahmen gering sein, sodass Bewegungen des Kunden/Patienten nicht die Daten verfälschen. Bevorzugt ist es daher, dass die Schritte 100 und 200 möglichst zeitnahe, bestenfalls gleichzeitig ausgeführt werden.

Anschließend wird in den Bildern in Schritt 225 ein ausgewählter Punkt bestimmt. Dieser ausgewählte Punkt wird nachfolgend auch als Untersuchungspunkt bestimmt. Es sei angemerkt, dass auch eine Vielzahl von Untersuchungspunkten bestimmt werden kann. In diesem Fall können die nachfolgenden Schritte jeweils auch für andere Untersuchungspunkte parallel, zeitversetzt oder hintereinander ausgeführt werden.

Die Bestimmung kann manuell, teil-manuell oder automatisch erfolgen. Bei einer manuellen oder teil-manuellen Auswahl können z.B. die aufgenommen Bilder auf dem GUI dargestellt werden und der Anwender, z.B. ein Optiker, kann einen Untersuchungspunkt (oder mehrere) Untersuchungspunkte bestimmen. Bei einer teil-manuellen Auswahl oder einer automatisierten Auswahl kann der Untersuchungspunkt durch einen Benutzer in einem Schritt 250 bestätigt und / oder verschoben werden.

In Ausführungsformen der Erfindung kann zudem vorgesehen sein, dass Bilderkennungsalgorithmen zur Bestimmung eines oder mehrerer Untersuchungspunkte zum Einsatz kommen. Ausgezeichnete Punkte können z.B. markante Gesichtspartien, eine Pupille des Kunden/Patienten, ein markanter Punkt an einem Brillengestell oder aber auch ein zur Kalibrierung bereitgestellter Kalibrierkörper sein. In Ausführungsformen der Erfindung weist das Zielfeld ZF zumindest ein Teil eines menschlichen Gesichtes auf. D.h. es kann auf Kalibrierkörper verzichtet werden.

Dabei ist zu beachten, dass Ungenauigkeiten bei der Findung eines Untersuchungspunktes auch den bestimmten Abstand der Sichtlinien potenziell vergrößern und daher der Grenzwert angepasst (evtl. höher angesetzt) werden sollte, um sicher zu sein, dass dieses System keinen erhöhten Kalibrierfehler hat. Es kann aber auch eine Vielzahl von Punkten verwendet werden und ein mittlerer Abstand als Qualitätskriterium dienen. In einem speziellen Fall werden z.B. eine oder beide Pupillen als ausgezeichnete Punkte verwendet (oder kleine Fassungs- oder Gesichtsdetails (z.B. Schriftzug auf der Fassung oder den Stützgläsern oder Pigmente oder Pickel im Gesicht) und als Qualitätsmerkmal wird der Abstand des/der ausgewählten Punktes/e im Seitenkamerabild von der in dieses Bild aus der Kalibrierung berechneten projizierten Sichtlinie aus dem im 1. Bild ausgewählten ausgezeichneten Punktes gewählt. Dieser Abstand ist proportional zum Abstand der beiden Sichtlinien im 3D-Raum und wird in Pixel gemessen.

In Ausführungsformen der Erfindung kann zudem vorgesehen sein, dass der Untersuchungspunkt durch einen Benutzer bestätigt und / oder verschoben 250 werden kann. D.h. der Benutzer kann z.B. eine fehlerhaft erkannte Zuordnung eines markanten Punktes in beiden Bildern korrigieren und so eine fehlerhafte Erkennung vermeiden.

Nachdem ein Untersuchungspunkt ausgewählt ist, kann nunmehr in Schritt 300 eine erste Sichtlinie S1 der ersten Kamera K1 mithilfe der hinterlegten Kalibrierung aus dem ersten Bild und dem zweiten Bild in Bezug auf den bestimmten Untersuchungspunkt berechnet werden. Gleichfalls kann in Schritt 400 eine Sichtlinie S2 der zweiten Kamera K2 mithilfe der hinterlegten Kalibrierung aus dem ersten Bild und dem zweiten Bild in Bezug auf den bestimmten Untersuchungspunkt berechnet werden. Die Kalibrierung umfasst dabei einen Satz von Kalibrierparametern mit denen z.B. die interne Kalbirierung (Kamerabezogen, wie z.B. Brennweite, Pixel-Aspekt-Verhältnis, Bildachse, Verzeichnungsfehler) als auch die externe Kalibrierung (Position und Orientierung der ersten Kamera und der zweiten Kamera zueinander z.B. Rotation / Translation in einem gemeinsamen Koordinatenraum) beschreiben ist.

Offensichtlich können die Schritte 100 und 200 auch in umgekehrter Reihenfolge oder gleichzeitig ausgeführt werden.

Anschließend kann nun in Schritt 500 der Abstand d der ersten Sichtlinie S1 zu der zweiten Sichtline S2 bestimmt werden. Der Abstand d zweier Linien kann z.B. als Abstand zweier Ebenen aufgefasst werden, wobei eine erste Ebene die Sichtlinie S1 und einen Richtungsvektor der Sichtlinie S2 enthält, während eine zweite Ebene die Sichtlinie S2 und einen Richtungsvektor der Sichtlinie S1 enthält. Dieser Abstand d wird dann auch der geringste Abstand zwischen Punkten der Sichtline darstellen.

Dieser so gewonnene Abstand d kann nun in Schritt 600 mit einem vorbestimmten Wert verglichen werden.

Dabei macht sich die Erfindung zu Nutze, dass in einem realen Stereokamerasystem die line of sight / Sichtlinien, welche rekonstruiert werden, in aller Regel sich nicht schneiden. In einem theoretischen System, das vollkalibriert wäre, würden sich hingegen die Sichtlinien schneiden.

Dieser Abstand d kann daher als ein Qualitätsmerkmal der Kalibrierung dienen. Bei einem realen System welches (theoretisch) perfekt kalibriert ist gibt es zumeist einen von 0 verschiedenen Abstand, da zumindest ein Pixel einer Kamera eine gewisse Größe besitzt und daher ein Aufpunkt der Sichtlinie diese Größe als Unsicherheit beinhaltet. In realen Systemen wird dieser Abstand aufgrund der bestehenden Unsicherheiten in der Bestimmung der Parameter einer Kalibrierung größer 0 sein. Dieser Abstand d wird durch die Güte der Kalibrierung als auch durch die Positionsbestimmung des Untersuchungspunktes in beiden Bildern bestimmt. Bei einer schlechten Kalibrierung ergeben sich größere Abstände, da die jeweiligen Sichtlinien schlechter berechnet werden.

Daher kann der Abstand als Qualitätsmerkmal einer Kalibrierung angesehen werden. Um festzulegen wann ein System neukalibriert werden sollte, braucht man einen vorbestimmten Wert, ab wann eine Neukalibrierung notwendig erscheint.

Die Festlegung eines vorbestimmten Wertes für einen bestimmten Typ von Stereokamerasystem kann z.B. empirisch durchgeführt werden, indem z.B. mit einem (oder besser mehreren) gut kalibriertem(n) System(em) verschiedene korrespondierende Punkte ausgewählt werden und der Abstand der Sichtlinien S1, S2 der beiden Kameras bestimmt wird.

Die größten dort vorkommenden Abstände kann man als gut bezeichnen und diese mit einem Sicherheitsbetrag von z.B. +10% des größten Abstandes hinzuzugeben und so einen Grenzwert für ein schlecht kalibriertes System festlegen.

Andererseits wäre es auch möglich ein grenzwertig kalibriertes System als Basis zu nehmen und von dem grenzwertigen Abstand einen Sicherheitsbetrag von z.B. -10% des größten Abstandes abzuziehen und so einen Grenzwert für ein schlecht kalibriertes System festzulegen.

Offensichtlich könnten aber auch beide Überlegungen kombiniert werden und ein Mittelwert aus den so empirisch ermittelten bestimmten Werten gebildet werden.

Wenn der Abstand d größer als ein vorbestimmter Wert ist, kann eine fehlerhafte Kalibrierung in Schritt 700, z.B. lokal auf dem GUI des Stereokamerasystems 1 angezeigt werden. Alternativ oder zusätzlich kann auch ein Schritt 750 vorgesehen sein, in dem eine fehlerhafte Kalibrierung an ein entferntes Gerät mittels einer Kommunikationsschnittstelle I/O weitergeleitet wird.

D.h. die Erfindung ermöglicht direkt eine Feststellung eines Qualitätsmaßes der Kalibrierung. Dieses Qualitätsmaß kann auf Anforderung, periodisch, zufällig oder bei jeder Benutzung ermittelt werden.

Ergibt das Verfahren, dass die Abweichung des Abstandes vom vorbestimmten Wert abweicht, so kann die Kalibrierung erneut durchgeführt werden.

Mit der Erfindung ist es aber auch möglich neben der automatischen Überprüfung der Kalibrierung auch eine Rekalibrierung bzw. neue Kalibrierung zu erzeugen ohne dass erneut ein Kalibrierkörper verwendet werden muss.

Hierzu kann vorgesehen sein, dass im Falle einer fehlerhaften Kalibrierung zumindest ein Kalibrierparameter in Schritt 800 geändert wird und anschließend erneut eine erste Sichtlinie S1 und eine zweite Sichtline S2 berechnet wird, wobei anschließend erneut ein Abstand d der ersten Sichtlinie S1 zu der zweiten Sichtline S2 ermittelt wird, wobei wenn der nunmehr ermittelte Abstand d geringer ist als der zuvor ermittelte Abstand der geänderte Kalibrierparameter für nachfolgende Messungen übernommen wird.

D.h. es reicht im Prinzip ein bestimmter Untersuchungspunkt aus, um eine aktualisierte (verbesserte) Kalibrierung zu erzeugen, da in aller Regel nur sehr wenige Änderungen (z.B. die Änderung der Rotation der Kameras zueinander) berücksichtig werden brauchen.

Dabei kann diese Schrittfolge erneut so oft durchlaufen werden, bis sich der Abstand nicht mehr verbessert. Offensichtlich erlaubt dies eine iterative Herangehensweise.

Offensichtlich kann diese Rekalibrierung nicht nur für einen Parameter sondern auch für mehrere Parameter durchgeführt werden. Dabei werden in aller Regel die Parameter einzeln optimiert. Zusätzlich kann vorgesehen sein, dass der Abstand bei Erreichen eines bestimmten Abstandes d als ausreichend kalibriert angesehen wird und die Rekalibrierung beendet wird. Erneut kann dieser bestimmte Wert empirisch ermittelt sein.

Werden vorstehend mehrere Untersuchungspunkte bestimmt ergeben sich auch mehrere Paare von Sichtlinien S1, S2. Für jedes Paar an Sichtlinien S1, S2 kann dann der Abstand d bestimmt werden. Es kann dann von Vorteil sein, wenn die Abstände d über die Untersuchungspunkte gemittelt werden und so ein mittlerer Abstand bestimmt wird. Damit kann sich eine höhere Genauigkeit ergeben, da Unsicherheiten in der Abstandsermittlung gemittelt werden können.

Des Weiteren können auch Abstände in verschiedenen Bildern des Stereokamerasystems berechnet werden und darüber gemittelt werden.

Offensichtlich kann durch Analyse der Rekalibrrierungsdaten auch auf bestimmte funktionale Zusammenhänge bei der Dekalbration geschlossen werden.

Hierzu können z.B. an einem entfernten Gerät die Rekalibrierungsdaten von vergleichbaren Stereokamerasystemen ausgewertet werden. Dabei können auch weitere Zustand- / Umgebungsdaten (Klimadaten) erhoben werden.

Die ermittelten funktionalen Zusammenhänge können z.B. dazu verwendet werden eine Rekalibrierung in einer bestimmten Abfolge der Parameteränderung durchzuführen, um so z.B. bestimmte erkannte thermische Ausdehnung und / oder mechanische Krafteinwirkungen gezielt auszukalbrieren.

Durch das beschriebene Verfahren und das beschriebene Stereokamerasystem 1 kann die Kalibrierung eines Stereokamerasystems 1 überprüft werden und auch eine Neukalibrierung durchgeführt werden, ohne dass eine Aufnahme von einem besonderen Kalibriertarget notwendig ist. Daher kann der kostenintensive und zeitintensive Einsatz eines Servicetechnikers vor Ort entfallen und das Verfahren kann auch genutzt werden, da sich das System selbst überprüft und dabei feststellen kann ob die Kalibrierung evtl. nicht mehr genügend ist. Dann besteht auch die Möglichkeit, dass sich das System automatisiert rekalibrieren lässt.

### Bezeichnungsliste

- 1: Stereokamerasystem
- K1, K2: Kamera
- ZF: Zielfeld
- d: Abstand
- I/O: Kommunikationsschnittstelle
- CPU: Prozessor
- MEM: Speicher
- S1: erste Sichtlinie
- S2: zweite Sichtlinie

### Verfahrensschritte

- 100: Aufnehmen eines ersten Bildes des Zielfeldes
- 200: Aufnehmen eines zweiten Bildes des Zielfeldes
- 225: Bestimmung eines Untersuchungspunktes
- 250: Bestätigen / Verschieben des Untersuchungspunktes durch einen Benutzer
- 300: Berechnen einer ersten Sichtlinie
- 400: Berechnen einer zweiten Sichtlinie
- 500: Bestimmung eines Abstandes der ersten Sichtlinie zu der zweiten Sichtline
- 600: Vergleich des Abstandes mit einem vorbestimmten Wert
- 7000: Anzeige einer fehlerhaften Kalibrierung
- 750: Anzeige einer fehlerhaften Kalibrierung an einem entfernten Gerät
- 800: Änderung zumindest eines Kalibrierparameters

## Patentansprüche

1. Verfahren für ein Stereokamerasystem (1) zur Erkennung von Abweichungen von einer Kalibrierung, wobei das Stereokamerasystem (1) eine erste Kamera (K1) und eine zweite Kamera (K2) aufweist, wobei die Kameras (K1, K2) aus unterschiedlichen Blickrichtungen auf ein Zielfeld (ZF) gerichtet sind, aufweisend die Schritte:
• Aufnehmen (100) eines ersten Bildes des Zielfeldes (ZF) mittels der ersten Kamera (K1) des Stereokamerasystems,
• Aufnehmen (200) eines zweiten Bildes des Zielfeldes (ZF) mittels der zweiten Kamera (K2) des Stereokamerasystems (1),
• Bestimmung (225) eines Untersuchungspunktes,
**dadurch gekennzeichnet, dass** das Verfahren weiter aufweist:
• Berechnen (300) einer ersten Sichtlinie (S1) zwischen der ersten Kamera und dem bestimmten Untersuchungspunkt mithilfe der hinterlegten Kalibrierparameter aus dem ersten Bild und dem zweiten Bild,
• Berechnen (400) einer zweiten Sichtlinie (S2) zwischen der zweiten Kamera und dem bestimmten Untersuchungspunkt mithilfe der hinterlegten Kalibrierparameter aus dem ersten Bild und dem zweiten Bild,
• Bestimmung (500) eines Abstandes der ersten Sichtlinie (S1) zu der zweiten Sichtline (S2),
• Vergleich (600) des Abstandes (d) mit einem vorbestimmten Wert,
• wobei wenn der Abstand (d) größer als ein vorbestimmter Wert ist, eine fehlerhafte Kalibrierung angezeigt (700) wird, und
• wobei im Falle einer fehlerhaften Kalibrierung zumindest ein Kalibrierparameter geändert (800) wird und anschließend erneut eine erste Sichtlinie (S1) und eine zweite Sichtline (S2) berechnet wird, wobei anschließend erneut ein Abstand der ersten Sichtlinie (S1) zu der zweiten Sichtline (S2) ermittelt wird, wobei wenn der nunmehr ermittelte Abstand geringer ist als der zuvor ermittelte Abstand der geänderte Kalibrierparameter für nachfolgende Messungen übernommen wird.

2. Verfahren nach Anspruch 1, **dadurch gekennzeichnet, dass** der Untersuchungspunkt durch einen Benutzer bestätigt und / oder verschoben (250) werden kann.

3. Verfahren nach Anspruch 1 oder 2, **dadurch gekennzeichnet, dass** das Zielfeld (ZF) zumindest einen Teil eines menschlichen Gesichtes aufweist.

4. Verfahren nach einem der vorhergehenden Ansprüche, **dadurch gekennzeichnet, dass** der vorbestimmte Wert zum Vergleich mit dem bestimmten Abstand (d) empirisch vorbestimmt ist.

5. Verfahren nach einem der vorhergehenden Ansprüche, **dadurch gekennzeichnet, dass** die Anzeige einer fehlerhaften Kalibrierung lokal am Stereokamerasystem (1) angezeigt (700) wird.

6. Verfahren nach einem der vorhergehenden Ansprüche, **dadurch gekennzeichnet, dass** die Anzeige einer fehlerhaften Kalibrierung an ein entferntes Gerät mittels einer Kommunikationsschnittstelle weitergeleitet (750) wird.

7. Verfahren nach einem der vorhergehenden Ansprüche, **dadurch gekennzeichnet, dass** die Bestimmung eines Untersuchungspunktes (225) einen Bilderkennungsvorgang aufweist.

8. Stereokamerasystem (1) aufweisend eine Bildverarbeitungseinrichtung, eine erste Kamera (K1) und eine zweite Kamera (K2), welches eingerichtet ist, ein Verfahren nach einem der vorhergehenden Ansprüche auszuführen.

## Claims

1. Method for a stereo camera system (1) for detecting deviations from a calibration, the stereo camera system (1) having a first camera (K1) and a second camera (K2), the cameras (K1, K2) being directed from different viewing directions onto a target field (ZF), having the steps:
- recording (100) a first image of the target field (ZF) by means of the first camera (K1) of the stereo camera system,
- recording (200) a second image of the target field (ZF) by means of the second camera (K2) of the stereo camera system (1),
- determination (225) of an examination point, **characterized in that** the method further comprises:
- calculating (300) a first line of sight (S1) between the first camera and the determined examination point using the stored calibration parameter from the first image and the second image,
- calculating (400) a second line of sight (S2) between the second camera and the determined examination point using the stored calibration parameter from the first image and the second image,
- determination (500) of a distance of the first line of sight (S1) to the second line of sight (S2),
- comparison (600) of the distance (d) with a predetermined value,
- wherein if the distance (d) is greater than a predetermined value, an incorrect calibration is indicated (700), and wherein
- in case of an incorrect calibration, at least one calibration parameter is changed (800) and a first line of sight (S1) and a second line of sight (S2) are then recalculated, wherein a distance of the first line of sight (S1) from the second line of sight (S2) then being determined again, wherein the changed calibration parameter being adopted for subsequent measurements if the distance now determined is less than the previously determined distance.

2. Method according to claim 1, **characterized in that** the examination point can be confirmed and/or moved (250) by a user.

3. Method according to claim 1 or 2, **characterized in that** the target field (ZF) comprises at least a part of a human face.

4. Method according to any one of the preceding claims, **characterized in that** the predetermined value for comparison with the determined distance (d) is empirically predetermined.

5. Method according to any one of the preceding claims, **characterized in that** the indication of an incorrect calibration is displayed (700) locally on the stereo camera system (1).

6. Method according to any one of the preceding claims, **characterized in that** the indication of an incorrect calibration is forwarded (750) to a remote device by means of a communication interface.

7. Method according to any one of the preceding claims, **characterized in that** the determination of an examination point (225) includes an image frame.

8. A stereo camera system (1) comprising an image processing device arranged to perform a method according to any one of the preceding claims.

## Revendications

1. Procédé pour un système de caméra stéréo (1) pour la reconnaissance d'écarts par rapport à un étalonnage, le système de caméra stéréo (1) présentant une première caméra (K1) et une deuxième caméra (K2), les caméras (K1 , K2) étant dirigées sur un champ cible (ZF) à partir de directions d'observation différentes, comprenant les étapes suivantes :
- enregistrement (100) d'une première image du champ cible (ZF) au moyen de la première caméra (K1) du système de caméras stéréoscopiques,
- enregistrement (200) d'une deuxième image du champ cible (ZF) au moyen de la deuxième caméra (K2) du système de caméra stéréo (1),
- détermination (225) d'un point d'examen, **caractérisé en ce que** le procédé comprend en outre :
- calcul (300) d'une première ligne de visée (S1) entre la première caméra et le point d'examen déterminé à l'aide de paramètre d'étalonnage déposé à partir de la première image et de la deuxième image,
- calcul (400) d'une deuxième ligne de visée (S2) entre la deuxième caméra et le point d'examen déterminé à l'aide de paramètre d'étalonnage déposé à partir de la première image et de la deuxième image,
- détermination (500) d'une distance entre la première ligne de visée (S1) et la deuxième ligne de visée (S2),
- comparaison (600) de la distance (d) avec une valeur prédéterminée, dans lequel, si la distance (d) est supérieure à une valeur prédéterminée, un étalonnage incorrect est indiqué (700), et dans lequel
- en cas d'étalonnage erroné, au moins un paramètre d'étalonnage est modifié (800) et ensuite une première ligne de visée (S1) et une deuxième ligne de visée (S2) sont à nouveau calculées, une distance entre la première ligne de visée (S1) et la deuxième ligne de visée (S2) étant ensuite à nouveau déterminée, le paramètre d'étalonnage modifié étant repris pour les mesures suivantes si la distance maintenant déterminée est inférieure à la distance précédemment déterminée.

2. Procédé selon la revendication 1, **caractérisé en ce que** le point d'examen peut être confirmé et / ou déplacé (250) par un utilisateur.

3. Procédé selon la revendication 1 ou 2, **caractérisé en ce que** le champ cible (ZF) comprend au moins une partie d'un visage humain.

4. Procédé selon l'une des revendications précédentes, **caractérisé en ce que** la valeur prédéterminée pour la comparaison avec la distance déterminée (d) est prédéterminée empiriquement.

5. Procédé selon l'une des revendications précédentes, **caractérisé en ce que** l'indication d'un calibrage erroné est affichée (700) localement sur le système de caméra stéréoscopique (1).

6. Procédé selon l'une des revendications précédentes, **caractérisé en ce que** l'indication d'un calibrage erroné est transmise (750) à un appareil distant au moyen d'une interface de communication.

7. Procédé selon l'une des revendications précédentes, **caractérisé en ce que** la détermination d'un point d'examen (225) comprend une opération de reconnaissance d'image.

8. Système de caméra stéréoscopique (1) présentant un dispositif de traitement d'images qui est conçu pour exécuter un procédé selon l'une des revendications précédentes.
